# EUROPEAN PATENT APPLICATION

(11) **EP 4 070 929 A1**
(43) Date of publication of application: **12.10.2022**
(21) Application number: 22167152.2
(22) Date of filing: 07.04.2022
(51) Int. Cl.: B29C 33/10, B29C 43/00, B29C 33/38, B29C 43/34, B29C 43/36, A23P 30/10, A21D 13/33

(54) **BIODEGRADABLE DISPOSABLE FOOD PACKAGING, METHOD OF ITS PRODUCTION AND MOULD FOR PRODUCTION OF BIODEGRADABLE DISPOSABLE PACKAGING**

(30) Priority: 08.04.2021 SK 500302021 U
(71) Applicant: Titan Construct engineering s.r.o., 927 05 Sala (SK)
(72) Inventor: Sedlár, Andrej, 927 05 a a (SK)
(74) Representative: Porubcan, Róbert

(57) **Abstract**

A biodegradable disposable packaging (1), preferably for meat, meat products or dairy products, is from the material which includes cereal flour and cellulose. The amount of cellulose is up to 20% of the mass. During the production the whole grain cereal flour, the cellulose and the water is mixed into a dough (3); the dough (3) is rolled into slabs with thickness which corresponds to the desired thickness of the wall of the finished packaging (1) with margin of error being -5% to +25%; subsequently the dough (3) is formed into the desired shape of the packaging (1) by means of a mould (2); and the dough (3) is dried by heat in the mould (2). Preferably, the rolled slab is inserted into a two-part mould (2) and the temperature of the dough (3) during drying reaches up to 220°C; preferably within the range 50°C to 160°C. The dough (3) is heated by the heat transfer from the heated mould (2) and/or by the microwave radiation and/or by a direct flame, and it is left in the mould (2) until the moisture decreases to 20% and less. The mould (2) is from plaster, carbon, earthenware, or sand.

## Description

### Field of technology

The invention concerns biodegradable disposable packaging on the basis of cereal flour without the use of fossil components, where the packaging is designed for packaging of food and it is easily compostable without production of toxic or dangerous substances. The method of production of biodegradable disposable packaging and the mould for its realization ensure an effective industrial production of packaging of various shapes and sizes.

### Prior state of the art

Various biodegradable disposable packagings which gradually replace the plastic packagings from fossil sources are known. Multiple biodegradable plastics proved to be unsuitable, since during their degradation the carrier structure of the body of the packaging disintegrates, but it results in small particles which do not disintegrate further, but which, on contrary, pollute the environment in form of micro-plastics. Some countries therefore banned disposable packaging from oxo-degradable plastics alongside the disposable plastic packagings.

Publication EP2767554 discloses the material consisting of biodegradable component and non-degradable polymer component, which, however, requires fossil sources during production. The file WO0122825 discloses a method of production of composite packaging material which, however, includes fibres mixed with biological degradable glue on the non-oil basis, starch, protein or protein-rich flour. The mixture is formed during heat with increased pressure so that the final composite is achieved.

Some biodegradable packaging materials are at the same time designed for consumption and usually they are rice-based or cereal flour-based. The disadvantage of the edible packing materials is their shorter durability and low shape stability. Such packagings can be used for the short time only, for example in gastronomic establishments when serving meals and so on. Packagings pursuant to publication CN111154147 have improved strength capabilities, where the material is a mixture of starch, corn flour, rice flour, food grade gum and modifier.

Some of the problems with shaping packagings from biodegradable materials are addressed by the publication US6146573, pursuant to which the thin-walled packagings such as cups, plates, fast food packaging, trays, flat coasters are produced by applying the starch-based baking mixture onto the lower part of the two-part mould and it is then baked until the moisture (humidity) ratio is between 6% to 22% of the mass. The baking mixture contains, aside from water and starch or starch mixtures or flour or starch derivatives, a fat-free or oil-free separating agent, too, and optionally also polyvinyl alcohol whose degree of polymerisation is more than 1000. The disadvantage of the mentioned solutions is that the preparation of mixtures and their moulding is relatively complicated.

Such simple technical solution is desired and not known, which will allow to produce sufficiently durable disposable packagings, which will then disintegrate without producing dangerous substances, whereby the resulting packagings must have shape stability and accuracy so that they can, *inter alia*, be quickly processed on the packaging lines for example in meat industry.

### Essence of the invention

Abovementioned deficiencies are significantly remedied by the biodegradable disposable food packaging which is defined in patent claims 1 to 6. The biodegradable disposable packaging is from the material on the basis of cereal flour and polysaccharide, whereby the polysaccharide includes cellulose. The cellulose in the material composition of the packaging is a polysaccharide, in particular vegetable polysaccharide, which is part of plant cell walls and has a B-glycoside bond. A use of other polysaccharide, starch for production of biodegradable packagings is known, but the cellulose polymer, as compared to starch, does not branch, but it stays in form of long straight chains. The saccharide matrix of the cellulose contributes to the high solidity and strength of the mixture with the cereal flour. The cellulose is produced mainly from wood and it therefore does not require fossil sources. For the whole mixture of the dough for production of packaging according to this invention it holds that it does not contain fossil components.

A connection of the cellulose exactly with whole grain cereal flour proved important. The whole grain cereal flour contains milled grain with bran, seed and sprit, too, and it contains more fibre as compared to flour produced by milling only seed. The fibre produces a carrier matrix together with cellulose polysaccharide and synergistically contributes to the shape solidity after the shape of the packaging is moulded. Flour-based packagings are known in the prior art, and they also include a cellulose at some places together with other components, but a simple mixture proved very advantageous, where the mixture includes whole grain flour and cellulose without other additives, or without the need for other components which would be supposed to improve the mechanic and ecological characteristics of the packaging. An addition of, for example, food colouring and so on, is not ruled out, though. A substitution of the common flour known in the state of the art for the whole grain flour brings about a surprising effect; such substitution is admittedly common in case of food, for example in case of pastry or bread, where such substitution improves the nutritional values, but that is not the case of this invention which does not address the improvement of sensory or nutritional values of the food. The combination of cellulose with the whole grain flour achieves new mechanical effects of the resulting packaging, and the dough can be processed better during moulding, rolling and pressing of packaging.

It proved to be especially preferable if one uses whole grain rye flour. The whole grain rye flour usually contains more surface particles of grain and it is thicker. Rye flours contain less gluten than wheat flours and the rye flour dough is denser. It is preferable if the cereal flour is at least T1000 type and more, where the number after "T" defines the amount of mineral substances per 100 grams of flour dry mass. Wholemeal flour is CPV category 15612110-5, the size of the milled particles (granularity) corresponds to categorization of flours - smooth flour / strong white flour / wholemeal flour - whereby with sieve with eye size 500 µm at least 96% of the mass falls through and in case of 160 µm sieve at most 15% of the mass falls through. That means that up to 96% of the milled flour is smaller than 500 µm and up to 15% is smaller than 160 µm. In order to achieve the situation that the dough can be processed well and high solidity and strength characteristics are later achieved, the cellulose is added to the mixture in the dry form with fibres' length being 150 µm to 2500 µm and thickness being 20 to 45 µm.

The advantage of the proposed invention is the material simplicity of the mixture for the production of the packagings. The resulting packaging contains no plastic components or additives which would pollute the environment during degradation. In principle, such packaging could be considered edible, even though edibility is not the goal of the proposed invention. The cereal flour, preferably whole grain cereal flour, and cellulose form two basic components, but addition of other natural additives is possible, too, such as edible salt or food colouring. The resulting biodegradable packaging is sufficiently solid and durable during the required period of functioning of the packaging, and after the product is unpacked it is easily compostable. Connection of whole grain flour and cellulose achieves high shape stability and resilience against fragile joint or breakage. High stability of the shape during the required period of durability of the food produced has been observed, too, even in case of cooling or freezing. Biodegradable disposable packaging is suitable especially for packaging of the meat and meat products (beef, pork, poultry meat), for packing fish, fish products, for packing dairy products, yoghurts, salads, and so on.

Connection of whole grain flour, mainly whole grain rye flour, and cellulose provides another functionality which is advantageous mainly when packing meat and meat products. When packing meat, mainly poultry, fish and meat products, a liquid component is detached during the storage, which mainly contains water and/or blood, and which is captured in the suction pad in order to maintain looks and in order to prevent the proliferation of pathogens. Common plastic packaging, for example, from polystyrene, is for such purposes supplemented with suction absorber which is eventually equipped with protective polyethylene layer on one or both sides. This layer is designed to prevent the meat from adhering onto the suction absorber. In such case the disposable packaging usually contains four different materials, which significantly decreases the practical possibilities of its recycling. Biodegradable disposable packaging according to this invention has sufficient suction capabilities, whereby the sucked volume of the liquid component does not cause damage to the shape and strength of the packaging. Thanks to this the need to insert independent suction absorber into the packaging disappears, it becomes obsolete, and the biodegradable disposable packaging is thereby all the more suitable for packing meat and/or meat products.

A method of production according to this invention is defined in patent claims 7 to 12 and it includes mixing of the cereal flour, cellulose and water into a dense dough; subsequently, the dough is rolled into slabs with thickness which corresponds to the desired thickness of the wall of the finished packaging with margin of error being -5% to +25%. This step of rolling in case of high productivity allows to optimize the composition of dough, since the dough does not have the features optimized for the fast flow in the press. In case of the method without rolling the dough must be capable of quick reforming during the flow into the critical spaces in the mould. The rolling of the dough adjusts the semifinished product for the purposes of pressing, whereby the significant distribution of the material into the flat shape is realized by rolling.

Rolled dough in form of a slab is inserted onto the mould or into the mould whose shape corresponds to outer or inner shape of the packaging and the slab is pressed onto the walls of the mould. At the same time, or subsequently, the slab is exposed to heat in order to achieve the drying of the dough. Preferably a two-part mould is used, where after closure of first and second part of the mould there is a cavity between these parts of the mould, which defines the desired shape of the packaging. The heat transferred into the dough dries and bakes the dough, whereby the temperature can reach 200°C, preferably it is up to 160°C, for example between 50°C to 160°C. Heat transfer from the heated part of the mould is usually used for heating and/or a microwave radiation and/or application of direct flame, and so on, can be used, too. The moulded slab of dough, or moulded dough, respectively, is left in the mould until the drying at least to level of 20% of moisture and less. The particular level of allowed moisture is achieved by a choice of retention period, whereby this level will depend on the amount of water added into the mixture during mixing, on the ratio of the cereal flour and cellulose, and also on the moisture of the mixture's components. During serial production the optimal retention period is defined by the testing of the samples in such a way that the eventual finishing drying into the moisture defined by the environment does not cause deformation of the shape of the packaging.

The basic method with the abovementioned steps can be adjusted in such a way that the dough produced after the mixing of the mixture in the measured amount is inserted into the two-part mould and by pressing the mould the dough is pushed into the whole cavity defining the desired shape of the packaging. Such method is preferable mainly in cases of packagings whose shape is inappropriate for the moulding from the rolled slab of dough, and where there would be critical deformations in the corners, and so on.

In order to increase the efficacy of production one can use multi-stage pressing, where in the first stage the dough or slab of dough is moulded and sufficient heat is led to it - that is, heat sufficient for subsequent drying - and then the heated intermediate product is in the second stage inserted into the mould with a vapour permeable surface, where the water vapour is led away in order to achieve desired level of moisture.

In order to achieve higher capacity of production of biodegradable disposable packagings, multiple pieces of packaging can be moulded at the same time in the multiple mould, where a continuous slab of dough is used to fill the mould and later the redundant edges are removed, or a multiple mould with a common inlet system is used, whereby the dough in a semi-liquid form is pressed into the cavity of the closed mould through the common inlet system, and subsequently the inlet system is removed and recycled as an additive to the mixture of the following batch of dough. Cut edges of the intermediate product or faulty products can also be used as a livestock feed or for composting.

The process of drying or baking the slab inserted to the mould, respectively is connected with the water drainage in form of a water vapour. Typical two-part mould, for example injection mould, is not adjusted for such drainage (discharge, removal) of gases. In order to achieve sufficiently quick drying of the slab, the mould according to this invention and pursuant to patent claims 13 to 15 has such a surface of at least one part that it is vapour permeable for the gases and vapours produced during the drying of the dough. Preferably, the surface that is vapour permeable is at least the surface intended to touch the slab of dough, or a whole single part is vapour permeable, or both parts of the two-part mould are vapour permeable. The vapour permeability can be ensured by porosity or micro-porosity of the material of the mould. The mould according to this invention can be produced from plaster, carbon, earthenware, sand or a similar material. In case the core of the mould is metal, the mould will at least on its surface, intended to touch the dough, be equipped with the vapour permeable layer, for example in form of metal sintered structure, metal grid and so on. Such vapour permeable layer is connected with the vent (deaerating) channel.

The subject matter of the protection is the biodegradable disposable packaging itself, as well as method of its production by means of moulding of the rolled dough, and the mould itself, which is peculiar with regard to necessity to discharge, lead away the water vapour. All these three categories significantly address the deficiencies in the prior art.

An important feature of the proposed invention is that it allows to produce disposable packagings with shape which is commonly used during packing in the food industry. Biodegradable disposable packaging according to this invention can be used, without further modifications, in the packing technology with high productivity and it is especially suitable for packing meat and/or meat products with the leaking liquid component. Biodegradable disposable packaging can be later simply composted or used as livestock feed.

### Description of drawings

The invention is further disclosed by drawings 1 to 7. The depicted shape of the packagings as well as scale of individual elements of mould is only for illustration purposes and cannot be interpreted as limiting the scope of protection.
Figure 1 depicts schematically in steps "a" to "e" the method of preparation of the mixture for dough, rolling of the dough to slab, insertion of slab into a two-part mould, drying at increased temperature, and taking out of the finished moulding from the mould. The vertical wavy lines on figures 1 to 3 depict the intake of the heat to the mould.
Figure 2 depicts schematically the method of pressing of the dough directly in the mould, where steps "a" to "e" depict the method of preparation of the mixture for dough, the insertion of the dough into two-part form, the pressing of the dough into a shape of the packaging, drying at increased temperature, and taking out of the finished moulding from the mould.
Figure 3 depicts the method with two-stage moulding, where after taking out of the intermediate product from the first heated mould there is a finishing drying in the second mould, combined with shape stabilization.
Figures 4 and 5 depict an example of the biodegradable disposable packaging in form of a tray for packing the cooled meat. Figure 4 is a spatial view and figure 5 is a cross-section of the bowl.
Figure 6 is an example of the two-part mould from carbon, where the arrows depict the discharge of the water vapour. The dotted fill depicts the micro-porosity of the mould's material.
Figure 7 depicts one part of the two-part multiple metal mould which is equipped by a micro-porous surface for the discharge of the water vapour. The arrows again depict the discharge of the water vapour.

### Examples of realization

### Example 1

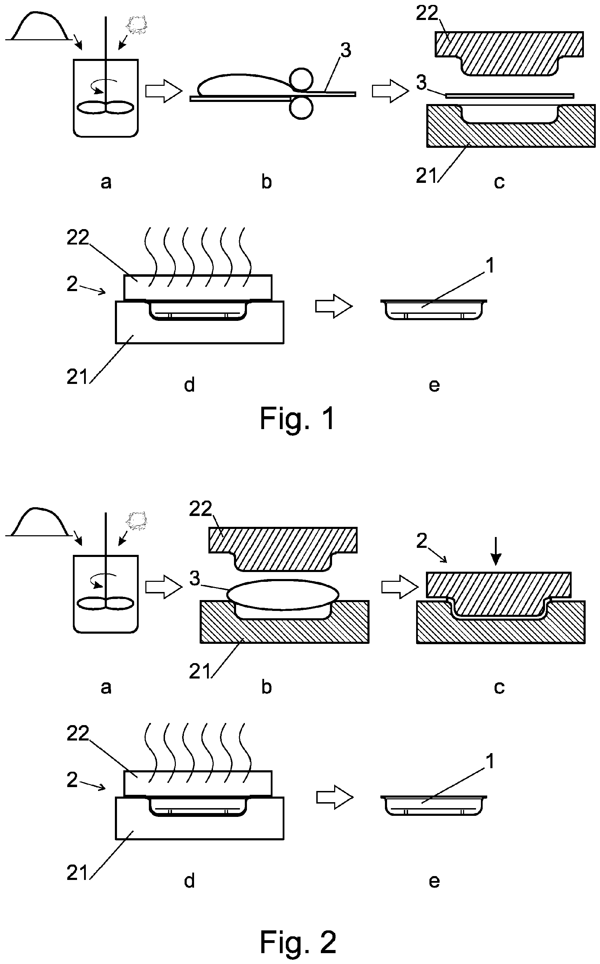

In this example pursuant to figures 1, 4 to 6, the biodegradable disposable packaging 1 is a tray for packing cooled meat. A two-part mould 2 from micro-porous carbon is used for its production.

The dough 3 is produced by mixing whole grain rye flour, cellulose and water. Firstly, the dry mixture composed from nine mass parts of whole grain rye flour and one mass part of cellulose is mixed. The water is added to the homogenously mixed mixture and the mixture is mixed into a form of a semi-solid dough 3 from which the water is not separated, and neither does the dough 3 spill or flow spontaneously. The dough 3 is rolled by a group of sequentially ordered reversible rollers into thickness of 3,3 mm which is 10% more than the thickness of the wall of the resulting packaging 1. In the cut-out mould a groundplan shape is cut out of the slab of dough 3, and the slab is subsequently inserted in the mould 2.

The mould 2 has a first part 21 and a second part 22; after the closure of the mould 2 a cavity is produced between its parts 21, 22; this cavity defines the tray. The first part 21 and the second part 22 of the mould 2 are produced from carbon which is naturally porous, and the electric heating rods and temperature sensors sensing the temperature of the mould 2 both inside its body and on its surface which is in touch with the dough 3 are mounted within both parts 21, 22 of the mould 2. The environment of the outside surface of the mould 2 is vented in order to achieve a sufficient moisture gradient. In case of whole-carbon mould 2 the water vapour leaks from the mould 2 through all outer surfaces.

The mould 2 is electrically heated into a stable temperature of 200°C. After the insertion of the cut out slab of dough 3 in the mould 2, the mould 2 is immediately closed in order to achieve the desired shape of the tray. Temperature sensor measures the heating of the dough 3 to a temperature approximately between 160°C to 170°C, and after achieving this temperature the intermediate product is left in the mould 2 for 45 seconds. At the end of this stage the moisture of the dough 3 is less than 12%. The mould 2 is opened and the tray is took out and another slab of dough 3 is inserted into the mould 2.

The resulting biodegradable disposable packaging 1 is suitable for packing meat, whereby it does not require further suction absorber; the material of the baked dough 3 is after cooling capable of sucking the liquid part which is leaking and separating from the packed meat.

Later, after the meat is unpacked, the biodegradable disposable packaging 1 is used as a livestock feed or it is simply composted on individual or communal level.

### Example 2

The cellulose in this example is 8% of the share of the dough's 3 mass. An edible salt is added to the dough 3 in amount of 1% of the mass. The dough 3 is mixed into a semi-liquid form and the weighed amount of dough 3 is inserted into the two-part mould 2 pursuant to figure 2. When the mould 2 is closed the dough 3 flows into the cavity defining the shape of the packaging 1. In this example the biodegradable disposable packaging 1 has a form of a deep tray or bowl; in this case the pressing from the rolled dough 3 would be problematic with regard to deformations and the flow of the material in the corners of the packaging 1.

### Example 3

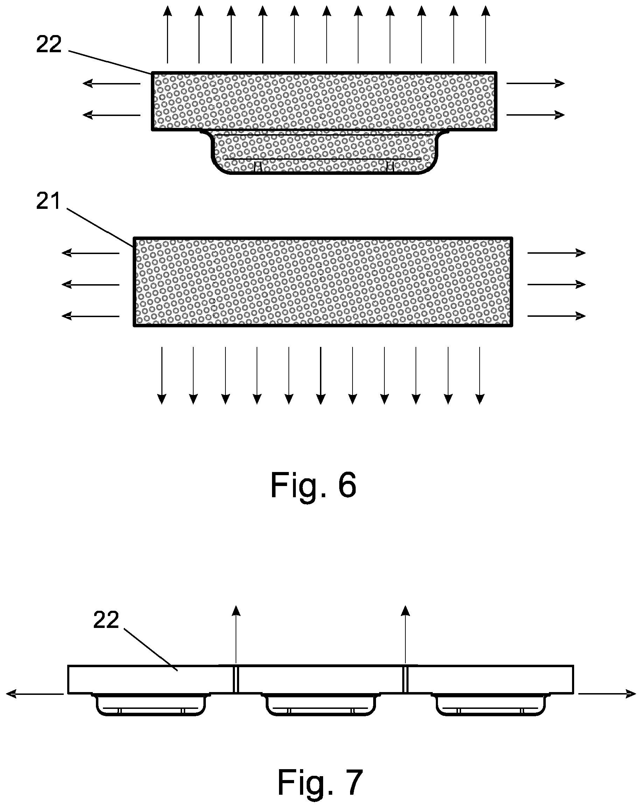

In this example pursuant to figure 7 a multiple two-part mould 2 for effective serial production of biodegradable disposable packagings 1 is used. The redundant material at the edges is removed by the cut-out mould after the baking of the dough 3. These remnants are after milling used again, when mixing a new batch of dough 3.

### Example 4

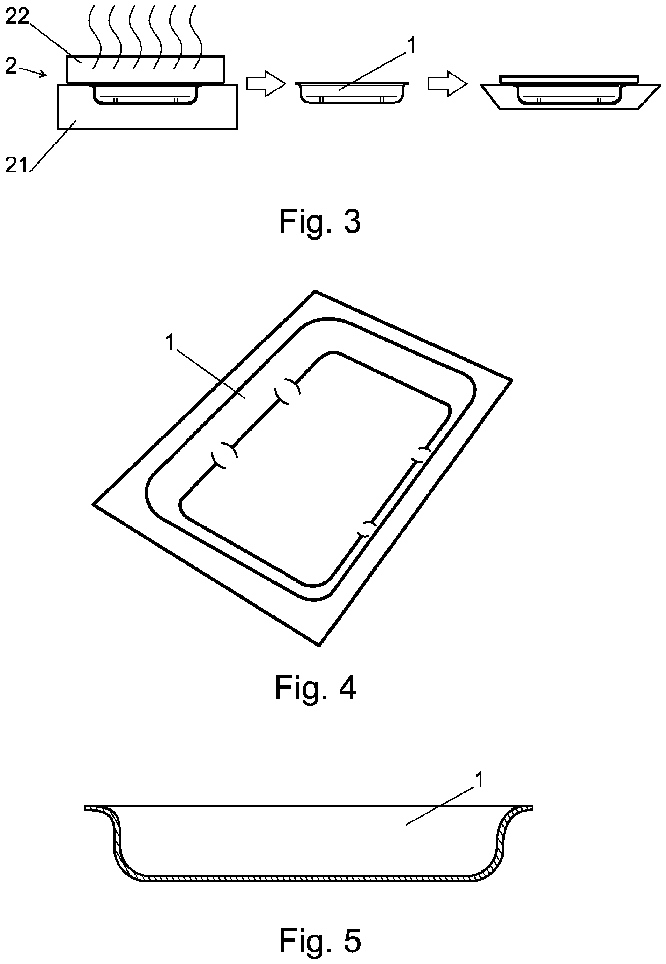

Moulding of the biodegradable disposable packaging 1 into a desired shape is separated into two stages pursuant to figure 3. In the first stage the dough 3 is moulded and heated approximately to 220°C by use of metal mould 2 with a non-adhesive layer. Subsequently, the biodegradable disposable packaging 1 is in the second stage moved into a mould 2 which has porous surface, and in this stage the moisture is led away, the shape is stabilized, and the moisture decreases to less than 15%.

### Example 5

When mixing the dough 3 a whole grain rye flour is used; in this example the national type is T1700 (medium to coarse granulometry; the number after "T" denotes the amount of mineral substances per 100 grams of flour dry mass), whereby 70 to 80 ml of water is added per 100 g of whole grain rye flour. This results in the dense mixture; the dough 3 is not sticky and it can be rolled by a machine.

### Industrial applicability

Industrial applicability is obvious. According to this invention it is possible to industrially and repeatedly produce a biodegradable disposable food packaging. The method of production and mould for production of the biodegradable disposable packaging allow for speedy industrial production from the food components.

### List of symbols

1 - packaging
2 - mould
   21 - first part of mould
   22 - second part of mould
3 - dough

## Claims

1. A biodegradable disposable food packaging from a material on a basis of a cereal flour and a cellulose **is characterized by the fact**, **that** the cereal flour is whole grain.

2. The biodegradable disposable food packaging pursuant to the claim 1 **is characterized by the fact, that** the cereal flour is rye.

3. The biodegradable disposable food packaging pursuant to the claim 1 or 2 **is characterized by the fact, that** the cereal flour is wholemeal, where particles forming at maximum 15% of a mass have a size less than 160 µm; preferably the cereal flour is low-gluten.

4. The biodegradable disposable food packaging pursuant to any of the claims 1 to 3 **is characterized by the fact, that** the cellulose's fibres are 150 µm to 2500 µm long and 20 µm to 45 µm thick.

5. The biodegradable disposable food packaging pursuant to any of the claims 1 to 4 **is characterized by the fact, that** an amount of cellulose is up to 20% of the mass, preferably up to 10% of the mass of an overall dry mixture of a dough (3) before an addition of a water.

6. The biodegradable disposable food packaging pursuant to any of the claims 1 to 5 is for a packing of meat and/or meat products and/or dairy products.

7. A method of a production of a biodegradable disposable food packaging **is characterized by the fact, that** a cereal whole grain flour, a cellulose and a water are mixed into a dough (3); the dough (3) is rolled into slabs with a thickness which corresponds to the desired thickness of a wall of the finished packaging (1) with margin of error being -5% to +25%; the slab is put on a mould (2) or put into the mould (2); and subsequently the dough (3) is formed into a desired shape of the packaging (1) by means of the mould (2); whereby the dough (3) is dried by a heat while it is in the mould (2).

8. The method of the production of the biodegradable disposable food packaging according to the claim 7 **is characterized by the fact, that** the dough (3) is inserted into the two-part mould (2) and the shape of the packaging (1) is shaped by pressing of a first part (21) of the mould (2) to a second part (22) of the mould (2).

9. The method of the production of the biodegradable disposable food packaging according to the claim 7 or 8 **is characterized by the fact, that** temperature of the dough (3) during drying reaches up to 220°C; preferably the temperature is up to 160°C; especially preferably it ranges from 50°C to 160°C.

10. The method of the production of the biodegradable disposable food packaging according to any of the claims 7 to 9 **is characterized by the fact, that** the dough (3) is heated by a transfer of the heat from a heated part of the mould (2) and/or by a microwave radiation and/or by a direct flame.

11. The method of the production of the biodegradable disposable food packaging according to any of the claims 7 to 10 **is characterized by the fact, that** the dough (3) is left in the mould (2) until a moisture decreases to 20% or less.

12. The method of the production of the biodegradable disposable food packaging according to any of the claims 7 to 11 **is characterized by the fact, that** multiple pieces of the packaging (1) are produced within a single step of moulding and drying by means of the multiple mould (2).

13. The mould for the production of the biodegradable disposable food packaging by the method according to any of the claims 7 to 12, where the mould (2) has the shape corresponding to the shape of the packaging (1), **is characterized by the fact, that** at least that part of the mould's (2) surface which is intended for a touch with the dough (3) is vapour permeable for vapours and gases produced during the drying of the dough (3).

14. The mould for the production of the biodegradable disposable food packaging according to the claim 13 **is characterized by the fact, that** the mould (2) is from a plaster and/or a carbon and/or an earthenware and/or a sand.

15. The mould for the production of the biodegradable disposable food packaging according to the claim 13 **is characterized by the fact, that** the mould (2) is metal, whereby on the surface which is intended for the touch with the dough (3) it is equipped by a vapour permeable layer which is connected with a vent channel.
